Europäisches Patentamt

European Patent Office

Office européen des brevets

(11) Veröffentlichungsnummer: **0 321 669 B1**

## EUROPÄISCHE PATENTSCHRIFT

(45) Veröffentlichungstag der Patentschrift: **15.04.92**

(21) Anmeldenummer: **88117214.2**

(22) Anmeldetag: **15.10.88**

(51) Int. Cl.⁵: **B24B 37/04,** B24B 49/00

(54) Steuersystem zum Planschleifen von gleichen Werkstück-Rohlingen.

(30) Priorität: **19.12.87 DE 3743275**

(43) Veröffentlichungstag der Anmeldung:
**28.06.89 Patentblatt 89/26**

(45) Bekanntmachung des Hinweises auf die
Patenterteilung:
**15.04.92 Patentblatt 92/16**

(84) Benannte Vertragsstaaten:
**CH FR GB IT LI NL SE**

(56) Entgegenhaltungen:
**DE-A- 3 221 381**
**DE-A- 3 408 348**
**GB-A- 2 122 518**
**US-A- 4 709 509**

(73) Patentinhaber: **MASCHINENFABRIK ERNST
THIELENHAUS GMBH
Schwesterstrasse 50
W-5600 Wuppertal 2(DE)**

(72) Erfinder: **Sennewald, Jürgen
Unnersberg 92
W-5650 Solingen(DE)**

(74) Vertreter: **Andrejewski, Walter et al
Patentanwälte Andrejewski, Honke & Partner
Postfach 10 02 54 Theaterplatz 3
W-4300 Essen 1(DE)**

**Beschreibung**

Die Erfindung geht aus von einem Verfahren zum Planschleifen von gleichen Werkstück-Rohlingen auf vorgegebene Dickentoleranzen bei einer Feinschleifmaschine, - mit den Merkmalen aus dem Oberbegriff des geltenden Patentanspruches 1. Ein solches Verfahren ist in wesentlichen Teilen aus der DE-AS 24 27 710 bekannt. - Bei den Werkstück-Rohlingen kann es sich beispielsweise um solche aus Metall, Hartmetall, keramischen Werkstoffen oder Kunststoff handeln. Die Werkstück-Rohlinge bringen toleranzbedingte Dickenabweichungen. Sie müssen mit engen Toleranzen eben bearbeitet und gleichzeitig auf vorgegebene Dicke eingerichtet werden. Umschaltbar in bezug auf den Spindelkopf meint, daß dessen Spindel im Bearbeitungstakt von einer Beschickstation über eine Meßstation und eine oder mehrere Bearbeitungsstationen der Entleerstation zugeschaltet werden. Im allgemeinen rotieren die Spindeln mit dem Werkstückaufnahmebauteil.

Beim Planschleifen mehrerer gleichartiger Werkstück-Rohlinge auf einem bewegbaren Maschinentisch einer Flachschleifmaschine ist es bekannt, mit Meßtastern einerseits die Höhe des Maschinentisches und andererseits die Höhe eines auf dem Maschinentisch angeordneten Bezugswerkstückes zu messen. Die Meßwerte werden abgespeichert. Aus der Differenz beider Meßsignale wird der Höhensollwert für die zu bearbeitenden Werkstück-Rohlinge gebildet. Die Messung erfolgt einmal während eines Umlaufes des Maschinentischs (DE-AS 24 27 710).

Aufgabe der Erfindung ist es, das gattungsgemäße Verfahren für eine Feinschleifmaschine mit einem umschaltbaren Spindelkopf und mehreren Spindeln so zu verbessern, daß toleranzbedingte Höhenfehler an den Werkstückaufnahmebauteilen sich nicht mehr fehlererzeugend auf die Dicke der zu bearbeitenden Werkstücke auswirken.

Diese Aufgabe wird mit dem Verfahren nach Patentanspruch 1 gelöst. Es versteht sich, daS die beschriebene Verbesserung erneut durchgeführt wird, wenn die Werkstückaufnahmebauteile, beispielsweise weil ein Werkstückwechsel stattfindet, ausgetauscht werden.

Bei dem gattungsgemäßen Verfahren muß unterschiedliche Höhe bzw. Länge der über den Spindelkopf vorstehenden Spindeln im allgemeinen nicht berücksichtigt werden, weil die Meßsteuereinrichtung erst dann, das Werkzeug steuernd, in Funktion kommt, wenn das Werkzeug auf die Werkstückoberfläche aufgesetzt wird. Man kann im Rahmen des Verfahrens nach dem Anspruch 1 aber auch unterschiedliche Höhen bzw. Längen der Spindeln über dem Spindelkopf berücksichtigen, wozu ein zusätzlicher Referenzpunkt an dem Spindelkopf vorzusehen ist.

Die erreichten Vorteile sind darin zu sehen, daß sich toleranzbedingte Höhenfehler an den Werkstückaufnahmebauteilen nicht mehr fehlerbildend auf die Dicke der bearbeitenden Werkstücke auswirken. Diese können mit extrem engen Toleranzen, d. h. mit hoher Präzision, ohne großen Aufwand gefertigt werden. Es versteht sich, daß der Meßtaster sowohl ein mechanischer als auch ein elektrischer oder optischer Meßtaster, beispielsweise eine Laserstrahl-Meßeinrichtung, sein kann.

Im folgenden wird die Erfindung anhand einer ein Ausführungsbeispiel darstellenden Zeichnung ausführlicher erläutert. Es zeigen in schematischer Darstellung

Fig. 1      perspektivisch von oben einen Spindelkopf,

Fig. 2      ein Schema zur Erläuterung des Verfahrens mit Bezugswerkstück,

Fig. 3      das Schema der Fig. 2 mit Werkstück-Rohlingen.

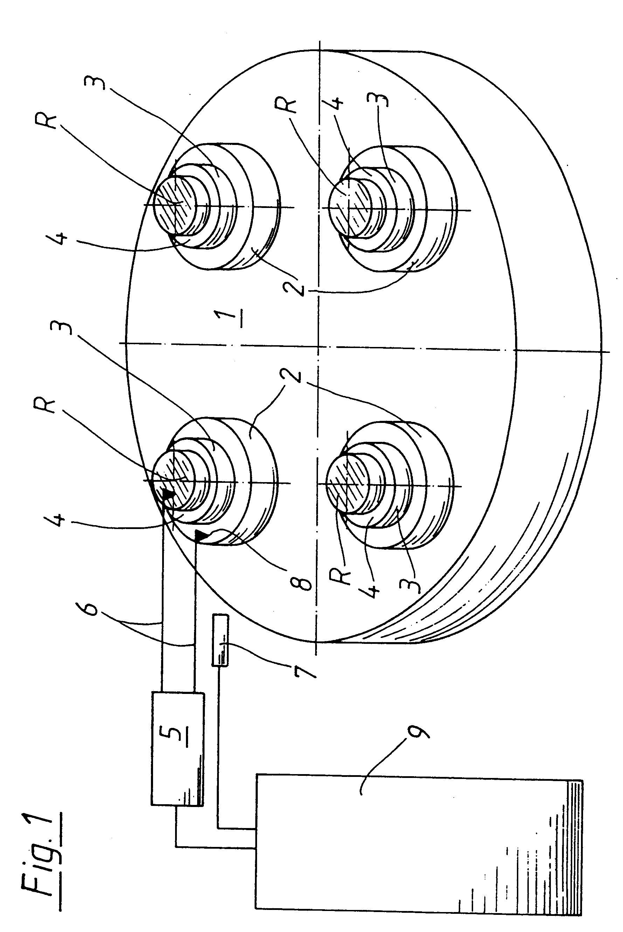

Die Fig. 1 zeigt einen Ausschnitt aus einer Feinschleifmaschine. Man erkennt einen umschaltbaren Spindelkopf 1, eine Mehrzahl von Spindeln 2 mit jeweils Werkstückaufnahmebauteil 3 und Werkstückauflager 4, aber auch aufgelegte Werkstück-Rohlinge R auf den einzelnen Werkstückauflagern. Im Ausführungsbeispiel trägt der Spindelkopf 1 vier Spindeln 2. Die Umschaltung des Spindelkopfes 1 erfolgt im Bearbeitungstakt so, daß alle Spindeln an einer nicht bezeichneten Beschickstation beschickt und einer vorgeordneten Entleerstation entleert werden können, während außerdem eine Meßstation und eine Bearbeitungsstation zur Verfügung stehen. Der Spindelkopf 1 ist integriert in ein Steuersystem zum Planschleifen von gleichen metallischen Werkstück-Rohlingen R auf vorgegebene Dickentoleranzen im Rahmen eines Feinschleifvorganges.

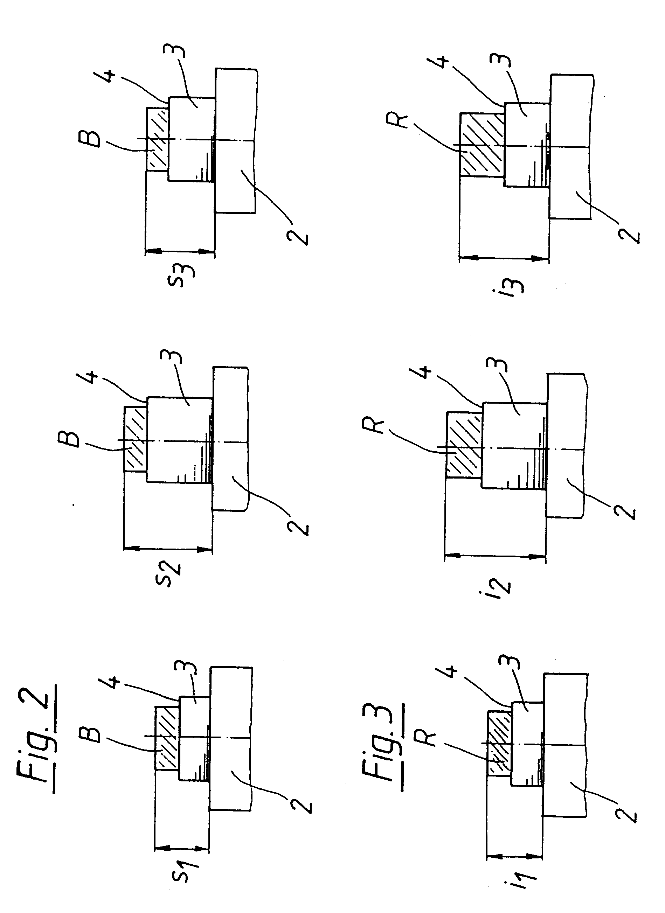

In der Fig. 1 erkennt man einen Meßkopf 5 mit einem Meßtaster 6 und einen Sensor 7. Der Sensor 7 stellt fest, welche Spindel 2 an dem Meßtaster 6 in der Meßstation vorsteht und an welcher Spindel 2 folglich die Vermessung durchgeführt wird. Der Meßtaster 6 stellt den Höhenistwert der zu bearbeitenden Werkstück-Rohlinge auf den jeweiligen Werkstückauflagern 4 gegenüber einem Referenzpunkt 8 der entsprechenden Spindel 2 fest. Dazu wird auf die Fig. 3 verwiesen, bei der unterschiedliche Werkstück-Rohlinge R auf den verschiedenen Werkstückauflagern 4 aufliegen. Zur Vereinfachung wurden nur drei Spindeln gezeichnet. Die Höhenistwerte $i_1, i_2$ und $i_3$ wurden eingetragen. Man erkennt in der Fig. 1 fernerhin eine Meßsteuereinrichtung 9. Die Höhenistwerte $i_1, i_2, i_3$ werden in die Meßsteuereinrichtung 9 eingeführt. Die Anordnung ist im übrigen so getroffen, daß die Meßsteuereinrichtung 9 bei der Bearbeitung des Werkstückes, dem ein bestimmter Höhenistwert zukommt, das Werkzeug nach Maßgabe dieses Höhenistwertes steuert, um eine vorgegebene Dicke des fertig bearbeiteten Werkstückes mit engen Toleranzen einzurichten.

Die Fig. 2 entspricht in bezug auf die Darstellung der Spindeln 2 und der Werkstückaufnahmebauteile 3 der Fig. 3. Der Meßsteuereinrichtung 9 ist jedoch ein den zu bearbeitenden Werkstück-Rohlingen R geometrisch ähnliches Bezugswerkstück B vorgegebener Dicke zugeordnet. In allen Teilfiguren der Fig. 2 möge das gleiche Bezugswerkstück B auf den Werkstückauflagern 4 liegen. Nun erfolgt eine Vermessung, wie in bezug auf die Werkstück-Rohlinge R bereits beschrieben. Hier führt die Messung zu Höhenmeßwerten $s_1, s_2$ und $s_3$. Die Meßsteuereinrichtung 9 weist einen Speicher auf, in dem die Höhenmeßwerte des Bezugswerkstückes B auf den einzelnen Werkstückauflagern 4 gegenüber den Referenzpunkten 8 als Sollwerte $s_1, s_2, s_3$ speicherbar sind. Die Meßsteuereinrichtung 9 vergleicht den Höhenistwert $i_1, i_2, i_3$ eines Werkstück-Rohlinges R auf einem Werkstückauflager 4 mit dem für dieses Werkstückauflager 4 gespeicherten Höhensollwert $s_1, s_2, s_3$. Nach Maßgabe der Differenz zwischen diesen beiden Werten wird das Werkzeug bei der Bearbeitung des Werkstückes gesteuert. - Es versteht sich, daß in den Zeichnungen die Dickenabweichungen bzw. Höhenabweichungen übertrieben gezeichnet worden sind.

**Patentansprüche**

1. Verfahren zum Planschleifen von gleichen Werkstück-Rohlingen (R) auf vorgegebene Dikkentoleranzen bei einer Feinschleifmaschine, die in einem umschaltbaren Spindelkopf (1) eine Mehrzahl von Spindeln (2) mit jeweils Werkstückaufnahmebauteil (3) und Werkstückauflager (4) aufweist, - wobei ein Meßtaster (6) den Höhensollwert ($S_1, S_2, S_3$) mittels eines Bezugswerkstückes (B) auf dem jeweiligen Werkstückauflager (4) gegenüber einem Referenzpunkt (8) festgestellt und dieser Höhensollwert ($S_1, S_2, S_3$) in eine Meßsteuereinrichtung (9) eingeführt und dort gespeichert wird und wobei die Meßsteuereinrichtung (9) bei der Bearbeitung von Werkstücken das Werkzeug unter Berücksichtigung dieses Höhensollwertes steuert, **dadurch gekennzeichnet,** daß zumindest ein den zu bearbeitenden Werkstück-Rohlingen (R) geometrisch ähnliches Bezugswerkstück (B) vorgegebener Dicke auf die Werkstückauflager (4) der einzelnen Spindeln (2) aufgelegt und wie ein Werkstück-Rohling (R) vermessen wird, daß dann die bearbeitenden Werkstück-Rohlinge (R) auf ihre Werkstückauflager (4) aufgelegt und vermessen werden sowie die gemessenen Höhenistwerte ($i_1, i_2, i_3$) gespeichert werden, und daß die Meßsteuereinrichtung (9) den Höhenistwert ($i_1, i_2, i_3$) eines Werkstückes auf einem Werkstückauflager (4) mit dem für dieses Werkstückauflager (4) gespeicherten Höhensollwert ($S_1, S_2, S_3$) vergleicht und nach Maßgabe der Differenz zwischen diesen beiden Werten das Werkzeug bei der Bearbeitung des Werkstückes steuert.

2. Verfahren nach Anspruch 1, dadurch gekennzeichnet, daß die Meßsteuereinrichtung (9) zusätzlich unterschiedliche Spindelhöhen oder Spindellängen über dem Spindelkopf (1) erfaßt.

**Claims**

1. A process for the face grinding of like workpiece blanks (R) to prescribed thickness tolerances in a finish grinding machine having, in an indexing spindle head (1), a plurality of spindles (2) each having a workpiece holder (3) and a workpiece support (4), - in which a measuring probe (6) determines the target height ($S_1, S_2, S_3$) relative to a reference point (8), with the aid of a reference workpiece (B) on the workpiece support (4) in question, and feeds the target height ($S_1, S_2, S_3$) into a size controller (9) in which it is stored, the size controller (9) thereafter controlling the tool during the machining operations to conform to the said target height, characterised in that at least one reference workpiece (B) of the prescribed thickness, geometrically similar to the workpiece blanks (R) to be machined, is placed on the workpiece supports (4) of the individual spindles (2) and measured as though it were a workpiece blank (R), the workpiece blanks (R), to be machined are placed on their workpiece supports (4) and measured, and the actual measured heights ($i_1, i_2, i_3$) are stored, the size controller (9) then comparing the actual height ($i_1, i_2, i_3$) of each workpiece on its workpiece support (4) with the stored target height ($S_1, l\ S_2, S_3$) for the workpiece support (4) in question, and controlling the tool whilst that workpiece is undergoing machining in conformity with the difference between the two heights.

2. A process as in Claim 1, characterised in that the size controller (9) additionally registers different spindle heights or spindle lengths over the spindle head (1).

**Revendications**

1. Procédé pour rectifier des ébauches identiques de pièces à usiner (R) à des tolérances d'épaisseur prédéterminées dans une rectifieuse de précision, qui comporte, dans une tête de broche commutable (1), une multiplicité de broches (2) comportant respectivement un composant (3) de logement d'une pièce à usiner et un support (4) de pièce à usiner, selon lequel un palpeur de mesure (6) détermine la valeur de consigne de hauteur ($S_1$, $S_2$, $S_3$) à l'aide d'une pièce à usiner de référence (B) installée sur le support respectif (4) de pièce à usiner, par rapport à un point de référence fixe (8), et cette valeur de consigne de hauteur ($S_1$, $S_2$, $S_3$) est introduite dans un dispositif de commande de mesure (9) et y est mémorisée, et, lors de l'usinage de pièces à usiner, le dispositif de commande de mesure (9) commande la pièce à usiner en tenant compte de cette valeur de consigne de hauteur, caractérisé en ce qu'on place au moins une pièce à usiner de référence (B) possédant une épaisseur prédéterminée et semblable, du point de vue géométrique, aux ébauches (R), qui doivent être usinées, de pièces à usiner, sur les supports (4) de pièces à usiner des différentes broches (2) et qu'on la mesure comme une ébauche (R) de pièce à usiner, qu'ensuite on dispose et on mesure les ébauches (R), qui doivent être usinées, des pièces à usiner sur leurs supports (4) et on mémorise les valeurs réelles mesurées de hauteur ($i_1$, $i_2$, $i_3$), et que le dispositif de commande de mesure (9) compare la valeur réelle de hauteur ($i_1$, $i_2$, $i_3$) d'une pièce à usiner située sur un support (4) à la valeur de consigne de hauteur ($S_1$, $S_2$, $S_3$) mémorisée pour ce support (4) de pièce à usiner et, après détermination de la différence entre ces deux valeurs, commande l'outil lors de l'usinage de la pièce à usiner.

2. Procédé selon la revendication 1, caractérisé en ce que le dispositif de commande de mesure (9) détecte en outre des hauteurs ou des longueurs différentes de broches au-dessus de la tête de broche (1).

Fig.1

## Fig. 2

## Fig. 3